# EUROPEAN PATENT SPECIFICATION

(11) **EP 0 596 312 B1**
(45) Date of publication and mention of the grant of the patent: **27.01.1999**
(21) Application number: 93116828.0
(22) Date of filing: 19.10.1993
(51) Int. Cl.: C08G 18/79, B60R 21/04, B60R 21/20

(54) **Composite supplemental inflatable restraint doors**
Abdeckung aus Verbundmaterial für Airbag-Aufprallschutzvorrichtung
Couvercle en matière composite pour sac gonflable de retenue

(30) Priority: 06.11.1992 US 972330
(43) Date of publication of application: 11.05.1994
(73) Proprietor: BASF CORPORATION, Parsippany, New Jersey 07054 (US)
(72) Inventor: Shrewsburg, James E., Southgate, Michigan 48195 (US); Winsky, Timothy S., Riverview, Michigan 48192 (US); Hass, James David, Riverview, Michigan 48192 (US)
(74) Representative: Langfinger, Klaus-Dieter, Dr.

(56) References cited:
- EP-A- 0 149 236
- EP-A- 0 433 889
- DE-A- 2 922 769
- DE-U- 8 915 085
- US-A- 4 550 153
- US-A- 5 179 132

## Description

The present invention relates to composite supplemental inflatable restraint doors (SIR doors) and method of preparation. Specifically, the composite SIR doors of the present invention consist of a facing material, a two-component polyurethane foam system, and a structural support. The SIR doors of the present invention maintain their structural integrity during deployment of a passenger side air bag, yet have the plush look and feel of the traditional foamed instrument panel.

Today's automobile dashboards or instrument panels (IP) represent complex molded composite articles generally consisting of a surfacing film, an intermediate foam layer, and a supporting substrate. The addition of passenger side inflatable restraints (air bags) has increased the complexity and presented new problems in dashboard design and manufacture. Air bags are installed in an automobile to protect cabin occupants from injury. In the event of a collision, a rapidly inflating air bag is deployed via a small explosive-like charge to prevent occupant contact with the forward interior surfaces of the vehicle cabin.

Prior to deployment, the air bag must be stored. In general, such a storage assembly will have sides and one closed end, an open end with a moving/rupturable covering, and a reaction plate located between the closed end and the air bag, wherein said reaction plate provides the force necessary to deploy the air bag. This storage assembly is located for the driver side generally in the hub area of the steering wheel. For a passenger side air bag, the storage assembly's preferred position is in the dashboard, in line with the passenger seating area.

Various ways of integrating the air bag assembly into the dashboard to provide a commercially acceptable product have been used. U.S. Patent No. 5,084,122 comprises locating the air bag assembly in the dashboard covering the open end with the intermediate foam layer and surfacing the film of the dashboard composite and providing stitch-like slits in the area of the composite covering the open end to allow the composite to tear upon deployment of the air bag. A potential disadvantage of this system stems from the fact that there is no structural support for the opening cover making it susceptible to deformation due to thermal and/or mechanical stresses giving the dashboard a flawed appearance. Such deformation is perceived by the consumer as less than desirable. Another similar method of preparing an air bag assembly cover is described in U.S. Patent No. 4,246,213. This patent provides a cover member which is made up by a bag-shaped inner layer of a polyurethane foam laminate of low density and a bag-shaped outer layer of a polyurethane foam laminate of high density, wherein the laminated high and low density polyurethane foams have at least one aligned cut or slit, which selectively splits upon deployment of the air bag. U.S. Patents No. 4,893,833; 4,925,209; and 5,031,930 disclose air bag systems which utilize a cover door module mounted on the dashboard which opens by means of a hinge when the air bag is deployed.

The preparation of polyurethane foams, which can be used in the automotive industry, by using a grafted polyol is described in DE-A-29 22 769, US 4 550 153 and EP-A-149 236.

It is an object of the present invention to provide a two-component polyurethane foam system for use in an air bag assembly door. This urethane foam was developed to withstand extremely high tensile (0.492 - 1.181 N/mm²) (70-168 psi), elongation (110-330 percent), and tear forces (Block Tear 1225.7 - 2801.6 N/m (7-16 ppi) and Graves Tear 2451.4 - 5603.2 N/m (14-32 ppi), thus minimizing the possibility of foamdebris and occupant injury. The cohesive strength of the foam acts as the bonding agent between the surfacing film and the substrate, ensuring that the entire door remains intact, while the foam itself provides the plush look and feel expected of today's dashboards.

Polyurethane foams commonly used as the intermediate foam layer in dashboard production do not have the physical characteristics of tensile, elongation, and tear strength required to maintain the structural integrity of the composite molded door cover. Hard plastic materials used in air bag door covers in steering wheels, while providing structurallycompetent articles, lack the necessary look and feel for use in today's molded dashboard assemblies.

### Detailed Description of the Invention

The composite SIR door of the present invention is comprised of
A) a facing material;
B) a reinforcing structural support member; and,
C) a two-component polyurethane foam system.

The SIR door is mounted to the instrument panel by means of a hinge. The SIR door operates in a manner such that as the air bag expands, the SIR door swings open along the axis of the hinge allowing the air bag to deploy. Typical polyurethane formulations for instrument panels (IP) produce foams that do not have physical properties sufficient to maintain the integrity of the SIR door. It has been found that upon air bag deployment the doors utilizing IP foams tend to separate at both the foam-support and/or foam-facing interfaces, distributing fragments of foam throughout the passenger compartment. The SIR door of the present invention utilizes a polyurethane foam having physical properties sufficient to resist tearing and fragmentation.

The facing material used in the present invention can be any material commonly used in instrument panel production, provided it is flexible. The facing material may be synthetic resins such as polyvinylchloride (PVC), polyurethane, acrylonitrile-butadienestyrene resin (ABS), polyethylene, polypropylene, polyester, or nylon.

The material comprising the reinforcing structural support member may be made of metals, such as aluminum or steel. It may also be made of a known rigid material molded to a desired shape. Such known materials include fiber-reinforced acryloriitrile-butadienestyrene (ABS), polyphenylene oxide (PPO resin), or the like.

The foam-producing formulations used in the present invention are two-component systems as defined in claim 1. The foams used in the present invention are flexible foams exhibiting physical properties not found in typical IP foams. Examples of improved properties include: Percent Elongation from about 110 to about 330 percent; Tensile Strength from about 0.492 N/mm² to about 1.181 N/mm² (70 to about 168 psi); Block Tear from about 1225.7 N/m to about 2801.6 N/m (7 to about 16 ppi); and Graves Tear (at room temperature) values from about 2451.4 N/m to about 5603.2 N/m (14 to about 32 ppi).

The isocyanates which may be used in the present invention are mixtures of various modified and unmodified diisocyanates. Unmodified isocyanates include aliphatic or cycloaliphatic and aromatic polyisocyanates. Examples include 2,4- and 2,6 methylcyclohexylenediisocyanate, tetramethylene diisocyanate, cyclohexane diisocyanate, 2,4- toluene diisocyanate, 2,6-toluene diisocyanate, naphthalene-1,5-diisocyanate, and 1-methoxyphenyl-2,4-diisocyanate. Preferred isocyanates include 4,4'-diphenylmethane diisocyanate (MDI), mixtures of 4,4'- and 2,4-diphenylmethane diisocyanate. Included within the preferred isocyanates are those modified MDIs containing carbodiimide, allophanate, urethane, or isocyanurate structures. Of particular preference are mixtures of carbodiimide and urethane-modified MDIs. The isocyanates of the present invention are prepared by conventional methods known in the art, e.g., phosgenation of the corresponding organic amines.

The isocyanate reactive polyols contained in the B-side resin are generally hydroxyl group-containing compounds (polyols) useful in the preparation of polyurethanes described in the Polyurethane Handbook in Chapter 3, §3.1, pages 42-61, and in Polyurethanes: Chemistry and Technology in Chapter II, §§III and IV, pages 32-47. Many hydroxyl-group containing compounds may be used, including simple aliphatic glycols, dihydroxy aromatics, bisphenols, and hydroxyl-terminated polyethers, polyesters, and polyacetals, among others. Extensive lists of suitable polyols may be found in the above references and in many patents, for example, in columns 2 and 3 of U.S. Patent No. 3,652,639; columns 2-6 of U.S. Patent No. 4,421,872; and columns 4-6 of U.S. Patent No. 4,310,632; these three patents being hereby incorporated by reference.

Preferably used are hydroxyl-terminated polyoxyalkylene and polyester polyols. They are present in amounts from 60 percent to 85 percent by weight. The former are generally prepared by well-known methods, for example, by the base catalyzed addition of an alkylene oxide, preferably ethylene oxide (oxirane), propylene oxide (methyloxirane), butylene oxide, or tetrahydrofuran to an initiator molecule containing on the average two or more active hydrogens. Examples of preferred initiator molecules are dihydric initiators such as ethylene glycol, propylene glycol, butylene glycol, neopentyl glycol, 1,6-hexanediol, hydroquinone, resorcinol, the bisphenols, aniline and other aromatic monoamines, aliphatic monoamines, and monoesters of glycerine; trihydric initiators such as glycerine, trimethylolpropane, trimethylolethane, N-alkylphenylenediamines, mono-, di-, and trialkanolamines.

Addition of alkylene oxide to the initiator molecules may take place simultaneously or sequentially when more than one alkylene oxide is used, resulting in block, heteric, and block-heteric polyoxyalkylene polyethers. The number of hydroxyl groups will generally equal the number of active hydrogens in the initiator molecule. Processes for preparing such polyethers are described both in the Polyurethane Handbook and Polyurethanes: Chemistry and Technology as well as in many patents, for example, U.S. Patents 1,922,451; 2,674,619; 1,922,459; 3,190,927; and 3,346,557.

Polyester polyols also represent preferred polyurethane-forming reactants. Such polyesters are well known in the art and are prepared simply by polymerizing polycarboxylic acids or their derivatives, for example, their acid chlorides or anhydrides, with a polyol. Numerous polycarboxylic acids are suitable, for example, malonic acid, citric acid, succinic acid, glutaric acid, adipic acid, pimelic acid, azelaic acid, sebacic acid, maleic acid, fumaric acid, terephthalic acid, and phthalic acid. Numerous polyols are suitable, for example, the various aliphatic glycols, trimethylolpropane and trimethylolethane, α-methylglucoside, and sorbitol. Also suitable are low molecular weight polyoxyalkylene glycols such as polyoxyethylene glycol, polyoxypropylene glycol, and block and heteric polyoxyethylene-polyoxypropylene glycols. These lists of dicarboxylic acids and polyols are illustrative only and not limiting. An excess of polyol should be used to ensure hydroxyl termination, although carboxy groups are also reactive with isocyanates. Methods of preparation of such polyester polyols are given in the Polyurethane Handbook and in Polyurethanes: Chemistry and Technology.

Other polyoxyalkylene polyether polyols which may be employed are those which contain grafted therein vinylic monomers. They are present in amounts from 12 percent to 30 percent by weight.

The polyols which have incorporated therein the vinylic polymers may be prepared (1) by the in situ free-radical polymerization of an ethylenically unsaturated monomer or mixture of monomers in a polyol, or (2) by dispersion in a polyol of a preformed graft polymer prepared by free-radical polymerization in a solvent such as described in U.S. Patents 3,931,092; 4,014,846; 4,093,573; and 4,122,056; the disclosures of which are herein incorporated by reference, or (3) by low temperature polymerization in the presence of chain transfer agents. These polymerizations may be carried out at a temperature between 65°C and 170°C, preferably between 75°C and 135°C.

The amount of ethylenically unsaturated monomer employed in the polymerization reaction is generally from one percent to 60 percent, preferably from 10 percent to 40 percent, based on the total weight of the product. The polymerization occurs at a temperature between about 80°C and 170°C, preferably from 75°C to 135°C.

The polyols which may be employed in the preparation of the graft polymer dispersions are well known in the art. Both conventional polyols essentially free from ethylenic unsaturation such as those described in U.S. Patent No. Re. 28,715 and unsaturated polyols such as those described in U.S. Patent No. 3,652,659 and Re. 29,014 may be employed in preparing the graft polymer dispersions used in the instant invention, the disclosures of which are incorporated by reference. Representative polyols essentially free from ethylenic unsaturation which may be employed are well known in the art. They are often prepared by the catalytic condensation of an alkylene oxide or mixture of alkylene oxides either simultaneously or sequentially with an organic compound having at least two active hydrogen atoms such as evidenced by U.S. Patents 1,922,459; 3,190,927; and 3,346,557; the disclosures of which are incorporated by reference.

The unsaturated polyols which may be employed for preparation of graft copolymer dispersions may be prepared by the reaction of any conventional polyol such as those described above with an organic compound having both ethylenic unsaturation and a hydroxyl, carboxyl, anhydride, isocyanate, or epoxy group; or they may be prepared by employing an organic compound having both ethylenic unsaturation, as a hydroxyl, carboxyl, anhydride, or epoxy group as a reactant in the preparation of the conventional polyol. Representative of such organic compounds include unsaturated mono- and polycarboxylic acids and anhydrides such as maleic acid, and anhydric, fumaric acid, crotonic acid, and anhydride, propenyl succinic anhydride, and halogenated maleic acids and anhydrides, unsaturated polyhydric alcohols such as 2-butene-1,4-diol, glycerol allyl ether, trimethylolpropane allyl ether, pentaerythritol allyl ether, pentaerythritol vinyl ether, pentaerythritol diallyl ether, and 1-butene-3,4-diol, unsaturated epoxides such as 1-vinylcyclohexene monoxide, butadiene monoxide, vinyl glycidyl ether, glycidyl methacrylate, and 3-allyloxypropylene oxide.

As mentioned above, the graft polymer dispersions used in the invention are prepared by the in situ polymerization of an ethylenically unsaturated monomer or a mixture of ethylenically unsaturated monomers, either in a solvent or in the above-described polyols. Representative ethylenically unsaturated monomers which may be employed in the present invention include butadiene, isoprene, 1,4-pentadiene, 1,5-hexadiene, 1,7-octadiene, styrene, α-methylstyrene, methylstyrene, 2,4-dimethylstyrene, ethylstyrene, isopropylstyrene, butylstyrene, phenylstyrene, cyclohexylstyrene, benzylstyrene, and the like; substituted styrenes such as chlorostyrene, 2,5-dichlorostyrene, bromostyrene, fluorostyrene, trifluoromethylstyrene, iodostyrene, cyanostyrene, nitrostyrene, N,N-dimethylaminostyrene, acetoxystyrene, methyl-4-vinylbenzoate, phenyoxystyrene, p-vinyldiphenyl sulfide, p-vinylphenyl oxide, and the like; the acrylic and substituted acrylic monomers such as acrylonitrile, acrylic acid, methacrylic acid, methylacrylate, 2-hydroxyethyl acrylate, 2-hydroxyethyl methacrylate, methyl methacrylate, cyclohexyl methacrylate, benzyl methacrylate, isopropyl methacrylate, octyl methacrylate, methacrylonitrile, methyl α-chloroacrylate, ethyl α-ethoxyacrylate, methyl α-acetum; inoacrylate, butyl acrylate, 2-ethylhexyl acrylate, phenyl acrylate, phenyl methacrylate, α-chloroacrylonitrile, N,N-dimethylacrylamide, N,N-dibenzylacrylamide, N-butylacrylamide, methacryl formamide, and the like; the vinyl esters, vinyl ethers, vinyl ketones, etc., such as vinyl acetate, vinyl chloroacetate, vinyl alcohol, vinyl butyrate, isopropenyl acetate, vinyl formate, vinyl acrylate, vinyl methacrylate, vinyl methoxyacetate, vinyl benzoate, vinyl iodide, vinyl toluene, vinyl naphthalene, vinyl bromide, vinyl fluoride, vinylidene bromide, 1-chloro-1-fluoroethylene, vinylidene fluoride, vinyl methyl ether, vinyl ethyl ether, vinyl propyl ether, vinyl butyl ether, vinyl 2-ethylhexyl ether, vinyl phenyl ether, vinyl 2-butoxyethyl ether, 2,4-dihydro-1,2-pyran, 2-butoxy-2'-vinyloxydiethyl ether, vinyl 2-ethylthioethyl ether, vinyl methyl ketone, vinyl ethyl ketone, vinyl phenyl ketone, vinyl phosphonates such as bis(β-chloroethyl) vinyl phosphonate, vinyl ethyl sulfide, vinyl ethyl sulfone, N-methyl-N-vinyl acetamide, N-vinyl-pyrrolidone, vinyl imidazole, divinyl sulfide divinyl sulfoxide, divinyl sulfone, sodium vinylsulfonate, methyl vinylsulfonate, N-vinyl pyrrole, and the like; dimethyl fumarate, dimethyl maleate, maleic acid, crotonic acid, fumaric acid, itaconic acid, monomethyl itaconate, butylaminoethyl methacrylate, dimethylaminoethyl methacrylate, glycidyl acrylate, allyl alcohol, glycol monoesters of itaconic acid, dichlorobutadiene, vinyl pyridine, and the like. Any of the known polymerizable monomers can be used, and the compounds listed above are illustrative and not restrictive of the monomers suitable for use in this invention. Preferably, the monomer is selected from the group consisting of acrylonitrile, styrene, methyl methacrylate, and mixtures thereof.

Illustrative initiators which may be employed for the polymerization of vinyl monomers are the well-known free radical types of vinyl polymerization initiators, for example, the peroxides, persulfates, perborates, percarbonates, azo compounds, etc., including hydrogen peroxide, dibenzoyl peroxide, acetyl peroxide, benzoyl hydroperoxide, t-butyl hydroperoxide, di-t-butyl peroxide, lauroyl peroxide, butyryl peroxide, diisopropylbenzene hydroperoxide, cumeme hydroperoxide, paramethane hydroperoxide, di-α-cumyl peroxide, dipropyl peroxide, diisopropyl peroxide, difuroyl peroxide, ditriphenylmethylperoxide, bis(p-methoxybenzoyl)peroxide, p-monoethoxybenzoyl peroxide, rubene peroxide, ascaridol, t-butyl peroxybenzoate, diethyl peroxyterephthalate, propyl hydroperoxide, isopropyl hydroperoxide, n-butyl hydroperoxide, t-butyl hydroperoxide, cyclohexyl hydroperoxide, trans-decalin hydroperoxide, α-methylbenzyl hydroperoxide, α-methyl-α-ethyl benzyl hydroperoxide, tetralin hydroperoxide, triphenylmethyl hydroperoxide, diphenylmethyl hydroperoxide, α,α'-azo-bis(2-methyl)butyronitrile, α,α'-azo-bis(2-methyl)heptonitrile, 1,1-azo-bis(1-cyclohexane)carbonitrile, dimethyl α,α'-azobis(isobutyronitrile), 4,4'-azo-bis(4-cyanopetanoic) acid, azo-bis(isobutyronitrile), 1-t-amylazo-1-cyanocyclohexane, 2-t-butylazo-2-cyano-4-methyoxy-4-methylpentane, 2-t-butylazo-2-cyano-4-methylpentane,2-(t-butylazo)isobutyronitrile,2-t-butylazo-2-cyanobutane, 1-cyano-1-(t-butylazo)cyclohexane, t-butyl peroxy-2-ethylhexanoate, t-butylperpivalate, 2,5-dimethylhexane, 2,5-diper-2-ethyl hexoate, t-butyl perneo-decanoate, t-butyl perbenzoate, t-butyl percrotonate, persuccinic acid, diisopropyl peroxydicarbonate, and the like; a mixture of initiators may also be used. Photochemically sensitive radical generators may also be employed. Generally from about 0.5 percent to about 10 percent, preferably from about 1 percent to about 4 percent, by weight of initiator based on the weight of the monomer, will be employed in the final polymerization.

Stabilizers may be employed during the process of making the graft polymer dispersions. One such example is the stabilizer disclosed in U.S. Patent No. 4,148,840, which comprises a copolymer having a first portion composed of an ethylenically unsaturated monomer or mixture of such monomers and a second portion which is a propylene oxide polymer. Other stabilizers which may be employed are the alkylene oxide adducts of copolymers of styrene-allyl alcohol.

Any suitable catalyst may be used including tertiary amines such as triethylenediamine, N-methylmorpholine, N-ethylmorpholine, diethylethanolamine, N-cocomorpholine, 1-methyl-4-dimethylaminoethylpiperazine, methoxypropyldimethylamine, N,N,N'-trimethylisopropyl propylenediamine, 3-diethylaminopropyldiethylamine, dimethylbenzylamine, and the like. Other suitable catalysts are, for example, dibutyltin dilaurate, dibutyltin diacetate, stannous chloride, dibutyltin di-2-ethyl hexanoate, stannous oxide, as well as other organometallic compounds such as are disclosed in U.S. Patent No. 2,846,408. Catalysts are present in amounts from 0.2 percent to 1.2 percent by weight.

Chain extending and/or crosslinking agents employed in the preparation of polyurethane foams include those having two functional groups bearing active hydrogen atoms. A preferred group of chain extending agents includes ethylene glycol, diethylene glycol, propylene glycol, or 1,4-butanediol.

Additives which may be used in the process of the present invention include known pigments, such as carbon black, dyes, and flame retarding agents (e.g., tris-chloroethyl phosphates or ammonium phosphate and polyphosphate), surfactants, such as the well-known silicon surfactants, stabilizers against aging and weathering, plasticizers, such as gamma butyrolactone, fungistatic and bacteriostatic substances, and fillers.

The main blowing and density controlling agent used according to the present invention is water. It is present in amounts from 0.3 percent to about 2.0 percent by weight.

Having set forth the invention, the following examples are given by way of illustration and should not be construed as limiting in nature:
- Polyol A: is a trimethylolpropane-initiated polyoxypropylene polyoxyethylene block copolymer having a hydroxyl number of about 25 and a nominal molecular weight of 5,140.
- Polyol B: is a glycerine-initiated polyoxyethylene-polyoxypropylene heteric copolymer having a hydroxyl number of about 46 and a nominal molecular weight of 3,600.
- Polyol C: is a 31 percent solids, 1:1 acrylonitrile:styrene copolymer dispersed in a trimethylolpropane-initiated polyoxypropylene polymer having a polyoxyethylene cap and a hydroxyl number of about 25.
- Polyol D: is a dipropylene glycol-initiated polyoxypropylene-polyoxyethylene block copolymer having a hydroxyl number of about 29 and a nominal molecular weight of 3,473.
- Polyol E: is a glycerine-initiated polyoxypropylene-polyoxyethylene block copolymer having a hydroxyl number of about 27 and a nominal molecular weight of 4,047.
- Polyol F: is a toluenediamine-initiated polyoxyethylene polymer having a hydroxyl number of about 450 and a nominal molecular weight of 494.
- Polyol G: is a trimethylolpropane-initiated polyoxypropylene-polyoxyethylene block copolymer having a hydroxyl number of 35 and a nominal molecular weight of 4,121.
- LEXOREZ 1721-65: is a crosslinked poly(diethylene glycol, neopentyl glycol, 1,6-hexanediol adipate) having a hydroxyl number of about 65 and a nominal molecular weight of 3,780.
- PPK 839: is a 10 percent by weight carbon black dispersed in a dipropylene glycol-initiated polyoxypropylene-polyoxyethylene block copolymer having a hydroxyl number of about 29 and a nominal molecular weight of 3,473.
- METACURE T-5: is an alkyl tin catalyst available from Air Products Corp.
- XF-F1045: is a proprietary catalyst blend available from Air Products Corp.
- DABCO BL-19: is bis(dimethylaminoethyl)ether.
- DABCO 33LV®: is triethylenediamine in dipropylene glycol.
- Q2-5212: is methyl(propylhydroxide, ethoxylated) bis(trimethylsiloxy)silane available from Dow Corning.
- HexChem 977: is potassium octoate in dipropylene glycol.
- B-4113: is a silicone surfactant available from Goldschmidt.
- ISO 1: is a 50:50 mixture of a liquid solvent free carbodiimide modified 4,4'-diphenylmethane diisocyanate and a solvent free urethane modified diphenylmethane diisocyanate.
- ISO 2: is a polymethylene polyphenylisocyanate.
All amounts given are in weight percent unless otherwise indicated.

Examples 1, 2 and 4 were prepared using standard hand mix and open pour techniques. Predetermined amounts of resin and iso were added to a container. The resin and iso were mixed for about 8 seconds at about 3,000 rpm using a Lighting mixer equipped with a German mix blade. The mixture was poured into a preheated prepared mold. The mold was then clamped shut. The foam product was demolded and tested. All tests were performed using standard ASTM procedures.

Example 3,a preferred embodiment, was prepared as a "machine" mix. A PU-15 machine equipped with a 10 mm Cannon "L" head was used rather than hand mixing. The resin and iso were preheated to 43°C (110°F) and shot into a prepared mold. The mold was then clamped shut. The foam product was demolded and tested.

### EXAMPLES

| EXAMPLES | 1 | 2 | 3 | 4 |
|---|---|---|---|---|
| POLYOL A | --- | 62.04 | --- | --- |
| POLYOL B | --- | 0.96 | 3.01 | 1.00 |
| POLYOL C | 15.00 | 28.90 | 15.15 | 15.00 |
| POLYOL D | --- | --- | 74.22 | 75.41 |
| POLYOL E | 78.45 | --- | --- | --- |
| LEXOREZ 1721-65 | --- | 1.64 | 2.01 | 2.00 |
| PPK 839 | --- | 1.93 | --- | --- |
| METACURE T-5 | --- | --- | 0.02 | --- |
| XF-F1045 | --- | --- | 0.13 | --- |
| DABCO BL-19 | 0.20 | --- | 0.05 | 0.20 |
| DABCO 33LV® | 0.40 | 0.48 | --- | 0.40 |
| Q2-5212 | 0.50 | 0.29 | --- | 0.70 |
| ETHYLENE GLYCOL | 4.70 | 1.93 | 4.75 | 4.70 |
| WATER | 0.75 | 1.83 | 0.56 | 0.59 |
| TRIETHYLAMINE | --- | --- | 0.10 | --- |
| ISO 1 | 45.3 | 52.0 | 45.3 | 46.1 |

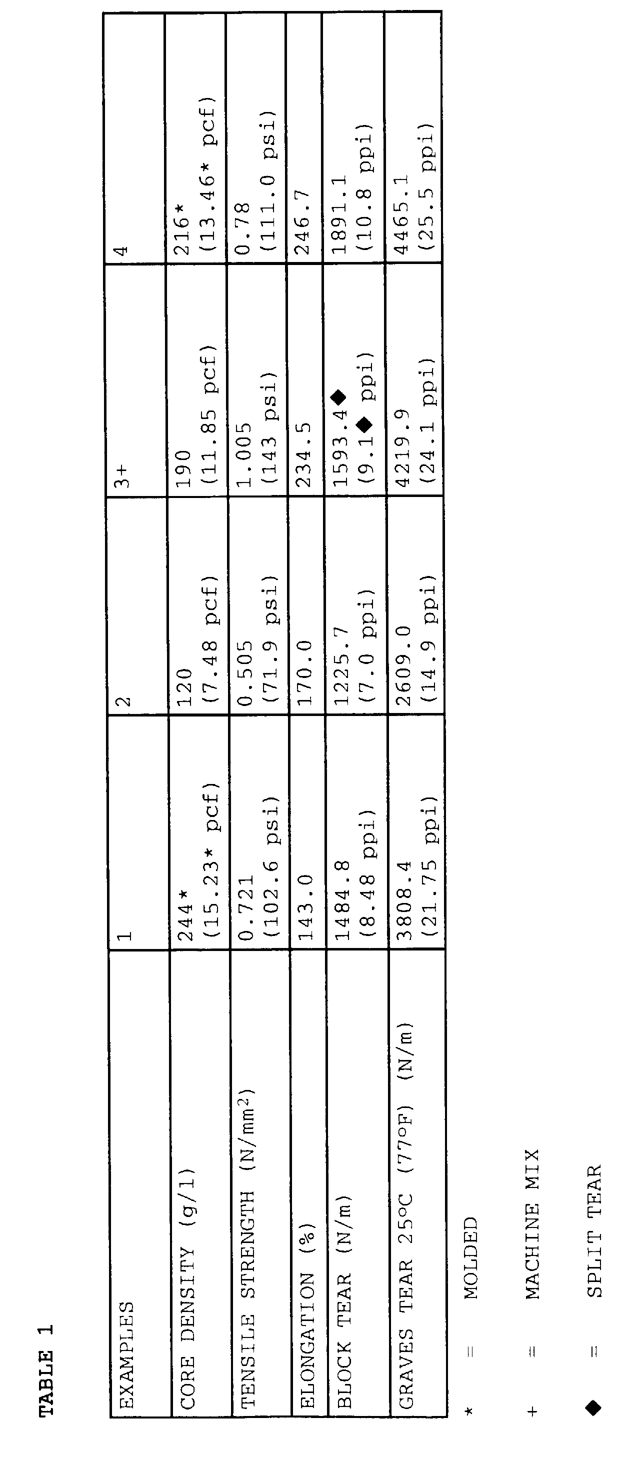

### COMPARATIVE EXAMPLE I

Comparative Example I was prepared using the same technique as used for Examples 1, 2 and 4. Results of the physical tests are listed below:

| | | | |
|---|---|---|---|
| POLYOL B | 0.94 | ISO 2 | 47.0 |
| POLYOL C | 9.36 | | |
| POLYOL F | 2.81 | | |
| POLYOL G | 79.71 | CORE DENSITY (pcf) | 7.24 (112.14 g/l) |
| LEXOREZ 1721-65 | 1.59 | TENSILE (psi) | 32.2 (0.226 N/mm² |
| PPK 839 | 1.88 | ELONGATION % | 53 |
| B 4113 | 0.20 | BLOCK TEAR (ppi) | 2.1 (367.71 N/m) |
| BL 19 | 0.08 | | |
| HEXCHEM 977 | 0.24 | | |
| METACURE T-5 | 0.01 | | |
| TRIETHANOLAMINE | 0.98 | | |
| WATER | 2.20 | | |

Foam blocks, using the formulation of Example 2 were prepared having various vinyl surfacing films. The foam-vinyl composite was then tested to determine the strength of the adhesive bond between the foam and the vinyl.

**Table II**

| EXAMPLE | VINYL | ADHESION (ppi) |
|---|---|---|
| 2 | RED FORMULA IV | 4.63 (810.7 N/m) |
| 2 | RED FORMULA IV (co-extruded) | 2.28 (399.2 N/m) |
| 2 | PVC CAST (RED) | 0.53 (92.8 N/m) |
| 2 | PVC CAST (GREY) | 0.55 (96.3 N/m) |
| Red Formula IV is a PVC, acrylonitrile-butadiene blend. | | |
| Red Formula IV (co-extruded) is a PVC, acrylonitrile-butadiene blend co-extruded with an acrylonitrile-butadiene sheet. | | |
| PVC Red and Grey are both cast polyvinylchloride sheets. | | |

The improved physical characteristics, such as tensile strength, elongation, and tear resistance, are shown in Table I for Examples 1-4. The comparative example represents a typical IP foam formulation and its physical properties. Table II illustrates the adhesion of the foam to various surface materials.

## Claims

1. A two-component flexible polyurethane foam system having improved tensile strength, elongation and tear resistance, comprising:
1) an organic isocyanate selected from the group consisting of mixtures of modified diisocyanates and mixtures of modified and unmodified diisocyanates; and,
2) a resin containing, based on the total weight of the resin,
a₁) from 60 percent to about 85 percent by weight of a hydroxyl-terminated polyoxyalkylen and/or polyester polyol,
a₂) from 12 percent to about 30 % by weight of polyoxyalkylene polyether polyols which contain grafted therein vinylic monomers,
b) from 0.2 percent to about 1.2 percent by weight of a catalyst capable of promoting urethane formation,
c) chain extender,
e) from 0,3 percent to about 2.0 percent by weight water, and
d,f) optionally pigments, flame retarding agents, surfactants, fillers, and stabilizers against weathering and aging,
wherein the flexible polyurethane foam has a tensile strength of between 0.492 N/mm² (70 psi) and 1.181 N/mm² (168 psi), an elongation between 110 and 330 percent, a block tear between 1225.7 N/m (7 ppi) and 2801.6 N/m (16 ppi), and a Graves tear, at room temperature, of 2451.4 N/m (14 ppi) to 5603.2 N/m (32 ppi).

2. A foam system as claimed in claim 1, wherein the isocyanate is a blend of a carbodiimide modified diphenylmethane diisocyanate and a urethane modified diphenylmethane diisocyanate.

3. A composite supplemental inflatable restraint door comprising:
A. a facing material;
B. a reinforcing structural support member; and,
C. a two-component flexible polyurethane foam system, comprising the reaction product of a two-component flexible polyurethane foam system, as claimed in claim 1.

4. A door as claimed in claim 3, wherein the facing material is selected from the group of synthetic resins consisting of polyvinylchloride, polyurethane, acrylonitrile-butadienestyrene, polyethylene, polypropylene, polyester, nylon, and mixtures thereof.

5. A door as claimed in claim 3, wherein the structural support member is selected from the group consisting of aluminium, steel, fiber-reinforced acrylonitrile-butadiene-styrene, and polyphenylene oxide resin.

6. A door as claimed in claim 3, wherein the diisocyanate is a mixture of a carbodiimide-modified diphenylmethane diisocyanate and a urethane-modified diphenylmethane diisocyanate.

## Patentansprüche

1. Polyurethanweichschaumstoff-Zweikomponentensystem mit verbesserten Zugfestigkeits-, Reißdehnungs- und Weiterreißwiderstandswerten, enthaltend:
1) ein organisches Isocyanat aus der Gruppe bestehend aus Gemischen aus modifizierten Diisocyanaten und Gemischen aus modifizierten und unmodifizierten Diisocyanaten und
2) ein Harz, enthaltend, bezogen auf das Gesamtgewicht des Harzes,
a₁) 60 bis etwa 85 Gewichtsprozent eines hydroxylgruppenterminierten Polyoxyalkylen- und/oder Polyesterpolyols,
a₂) 12 bis etwa 30 Gew.-% Polyoxyalkylenpolyetherpolyole mit aufgepfropften Vinylmonomeren,
b) 0,2 bis etwa 1,2 Gewichtsprozent eines zur Förderung der Urethanbildung befähigten Katalysators,
c) Kettenverlängerungsmittel,
e) 0,3 bis etwa 2,0 Gewichtsprozent Wasser und
d,f) gegebenenfalls Pigmente, Flammschutzmittel, oberflächenaktive Substanzen, Füllstoffe und Stabilisatoren gegen Verwitterung und Alterung,
wobei der Polyurethanweichschaumstoff eine Zugfestigkeit von 0,492 N/mm² (70 psi) bis 1,181 N/mm² (168 psi), eine Reißdehnung von 110 bis 330 Prozent, einen Blockreißwiderstand von 1225,7 N/m (7 ppi) und 2801,6 N/m (16 ppi) und einen Weiterreißwiderstand nach Graves bei Raumtemperatur von 2451,4 N/m (14 ppi) bis 5603,2 N/m (32 ppi) besitzt.

2. Schaumstoffsystem nach Anspruch 1, wobei es sich bei dem Isocyanat um eine Mischung aus einem carbodiimidmodifizierten Diphenylmethandiisocyanat und einem urethanmodifizerten Diphenylmethandiisocyanat handelt.

3. Klappe aus Verbundmaterial für eine Airbag-Aufprallschutzvorrichtung, enthaltend:
A. ein Verkleidungsmaterial;
B. ein Verstärkungsstützelement und
C. ein Polyurethanweichschaumstoff-Zweikomponentensystem, bei dem es sich um das Reaktionsprodukt eines Polyurethanweichschaumstoff-Zweikomponentensystems handelt, gemäß Anspruch 1.

4. Klappe nach Anspruch 3, wobei das Verkleidungsmaterial aus der Gruppe von Kunstharzen bestehend aus Polyvinylchlorid, Polyurethan, Acrylnitril-Butadien-Styrol, Polyethylen, Polypropylen, Polyester, Polyamid und deren Gemischen ausgewählt ist.

5. Klappe nach Anspruch 3, wobei das Stützelement aus der Gruppe bestehend aus Aluminium, Stahl, faserverstärktem Acrylnitril-Butadien-Styrol und Polyphenylenoxidharz ausgewählt ist.

6. Klappe nach Anspruch 3, wobei es sich bei dem Diisocyanat um ein Gemisch aus einem carbodiimidmodifizierten Diphenylmethandiisocyanat und einem urethanmodifizierten Diphenylmethandiisocyanat handelt.

## Revendications

1. Système de mousse de polyuréthane flexible à deux composants, ayant une résistance à la rupture par traction, un allongement et une résistance au déchirement améliorés, comprenant
1) un isocyanate organique choisi dans le groupe constitué de mélanges de diisocyanates modifiés et de mélanges de diisocyanates modifiés et non-modifiés ; et
2) une résine contenant, sur base du poids total de la résine,
a₁) de 60 % à environ 85 % en poids d'un polyoxyalkyléne et/ou d'un polyester-polyol, à terminaison hydroxyle,
a₂) de 12 % à environ 30 % en poids de polyoxyalkylène-polyéther-polyols qui contiennent, par greffage, des monomères vinyliques,
b) de 0,2 % à environ 1,2 % en poids d'un catalyseur capable de promouvoir la formation d'uréthane,
c) un agent d'extension de chaîne,
e) de 0,3 % à environ 2,0 % en poids d'eau, et
d, f) facultativement des pigments, des agents ignifuges, des surfactants, des matières de charge et des agents stabilisateurs contre les intempéries et le vieillissement,
dans lequel la mousse de polyuréthane flexible présente une résistance à la rupture par traction entre 0,492 N/mm² (70 psi) et 1,181 N/mm² (168 psi), un allongement entre 110 et 330 % et un Block Tear entre 1.225,7 N/m (7 ppi) et 2.801,6 N/m (16ppi) et un Graves Tear, à température ambiante, de 2.451,4 N/m (14 ppi) à 5.603,2 N/m (32 ppi).

2. Système de mousse selon la revendication 1, dans lequel l'isocyanate est un mélange d'un diphénylméthanediisocyanate modifié par du carbodiimide et d'un diphénylméthanediisocyanate modifié par de l'uréthane.

3. Couvercle composite pour élément de retenue supplémentaire gonflable, comprenant
A) un matériau d'habillage ;
B) un élément de support structural de renforcement ; et,
C) un système de mousse de polyuréthane flexible à deux composants, comprenant le produit de réaction d'un système de mousse de polyuréthane flexible à deux composants, selon la revendication 1.

4. Couvercle selon la revendication 3, dans lequel le matériau d'habillage est choisi dans le groupe des résines synthétiques, constitué du chlorure de polyvinyle, du polyuréthane, de l'acrylonitrile-butadiène-styrène, du polyéthylène, du polypropylène, du polyester, du Nylon et de leurs mélanges.

5. Couvercle selon la revendication 3, dans lequel l'élément de support structural est choisi dans le groupe constitué de l'aluminium, de l'acier, de l'acrylonitrile-butadiène-styrène renforcé par des fibres et de la résine d'oxyde de polyphénylène.

6. Couvercle selon la revendication 3, dans lequel le diisocyanate est un mélange d'un diphénylméthanediisocyanate modifié par du carbodiimide et d'un diphénylméthanediisocyanate modifié par de l'uréthane.
